# EUROPEAN PATENT SPECIFICATION

(11) **EP 4 523 941 B1**
(45) Date of publication and mention of the grant of the patent: **31.12.2025**
(21) Application number: 24195826.3
(22) Date of filing: 22.08.2024
(51) Int. Cl.: B60K 35/22, B60K 35/65, G06F 3/01, G06V 20/59, B60W 40/08

(54) **DRIVER MONITORING SYSTEM**
FAHRERÜBERWACHUNGSSYSTEM
SYSTÈME DE SURVEILLANCE DE CONDUCTEUR

(30) Priority: 14.09.2023 JP 2023149268
(43) Date of publication of application: 19.03.2025
(73) Proprietor: Suzuki Motor Corporation, Shizuoka 432-8611 (JP)
(72) Inventor: IWAMOTO, Kazuhito, HAMAMATSU-SHI, 432-8611 (JP); KOGA, Keiho, HAMAMATSU-SHI, 432-8611 (JP); SAITO, Ryo, HAMAMATSU-SHI, 432-8611 (JP)
(74) Representative: Plasseraud IP

(56) References cited:
- EP-B1- 4 063 150
- US-A1- 2022 266 764

## Description

### [Technical Field]

The present invention relates to a driver monitoring system for monitoring the state of a driver.

### [Background Art]

It has been known to provide a driver image capturing device that captures an image of the face of a driver of a vehicle in the vehicle compartment to monitor the state of the driver.

For example, the driver image capturing device disclosed in Figure 1 of Patent Literature 1 is a driver image capturing device for capturing an image of a driver in a vehicle in which an onboard device rises from the upper surface of the middle portion of an instrument panel in the vehicle width direction. The driver image capturing device includes a camera lens and a light-emitting unit. The camera lens is built in the onboard device and has an incident plane facing the driver side. The light-emitting unit is built in the onboard device and has an emission plane facing the driver side. The camera lens is provided at the end portion of the onboard device on the driver's seat side in the vehicle width direction. The light-emitting unit is provided at the end portion of the onboard device on the passenger seat side in the vehicle width direction. In addition, the driver image capturing device disclosed in Figure 5 of Patent Literature 1 is a driver image capturing device for capturing an image of a driver in a vehicle in which an onboard device rises from the upper surface of the middle portion of an instrument panel in the vehicle width direction and a hazard lamp switch is provided at the middle portion of the instrument panel in the vehicle width direction below the onboard device and in the middle between the upper and lower ends of the steering wheel in the vehicle up-down direction. The driver image capturing device includes a camera lens and a light-emitting unit. The camera lens is built in the end portion of an outer frame at both ends of the hazard lamp switch in the vehicle width direction on the driver's seat side in the vehicle width direction and the upper side in the up-down direction. The light-emitting unit is built in the end portion of the outer frame at both ends of the hazard lamp switch in the vehicle width direction on the passenger seat side in the vehicle width direction and the lower side in the up-down direction.

Patent Literature 2 discloses vehicle interior monitoring device including an imaging unit capable of imaging a target area containing the face of the driver sitting in the driver's seat in a vehicle interior, and an illumination unit capable of illuminating the target area, wherein the vehicle interior monitoring device is configured to monitor the state of the vehicle interior based on an image obtained by imaging the target area with the imaging unit while illuminating the target area using the illumination unit, a blow-out port for sending air for air-conditioning, and an air flow duct for guiding the air for air-conditioning to the blow-out port are provided in a central region of an instrument panel in a vehicle width direction, and the illumination unit is arranged in the central region of the instrument panel on a passenger seat side in the vehicle width direction with respect to the blow-out port.

### [Citation List]

### [Patent Literature]

[Patent Literature 1] JP 6481970 B2
[Patent Literature 2] EP 4063150 B1
[Patent Literature 3] US 2022/266764 A1

### [Summary of Invention]

### [Problems to be Solved by the Invention]

The driver image capturing device disclosed in Figure 1 of Patent Literature 1 is provided with the light-emitting unit in the onboard device rising from the upper surface of the middle portion of the instrument panel in the vehicle width direction. The seat side at the rear of the driver is thus also illuminated with light of the light-emitting unit. The light hitting the face of an occupant sitting on the seat at the rear of the driver is also received by the image capturing device as noise. The face of the occupant sitting in the back seat may therefore be recognized in error as the face of the driver.

In addition, when the camera lens is disposed at the hazard lamp switch provided below the onboard device rising on the upper surface of the middle portion of the instrument panel in the vehicle width direction as in Figure 5 of Patent Literature 1, the camera lens and the face of an occupant have a longer distance therebetween. This may prevent the face of the driver from being clearly recognized.

Accordingly, an object of the present invention is to provide a driver monitoring system including an imaging unit capable of capturing a clear image of the face of a driver while preventing a receiver from receiving light of a light-emitting unit that hits an occupant at the rear of a driver's seat.

### [Means for Solving the Problems]

The present invention is a driver monitoring system as defined in the independent claim 1.

### [Advantageous Effects of Invention]

According to the present invention, a driver monitoring system is provided including an imaging unit capable of capturing a clear image of the face of a driver while preventing a receiver from receiving light of a light-emitting unit that hits an occupant at the rear of a driver's seat.

### [Brief Description of Drawings]

[Figure 1] Figure 1 is a front view of an instrument panel of a vehicle on which a driver monitoring system according to the present embodiment is mounted.
[Figure 2] Figure 2 is a control block diagram of the driver monitoring system according to the present embodiment.
[Figure 3] Figure 3 is a longitudinal sectional view of the instrument panel of a vehicle on which a driver monitoring device according to the present embodiment is mounted.
[Figure 4] Figure 4 is a plan view of the instrument panel of the vehicle on which the driver monitoring system according to the present embodiment is mounted.
[Figure 5] Figure 5 is a partially enlarged view of the instrument panel including the driver monitoring system according to the present embodiment.
[Figure 6] Figure 6 is a partially enlarged view of the instrument panel including a transmitter of the driver monitoring system according to the present embodiment.
[Figure 7] Figure 7 is a front view of the instrument panel for describing disposition of the driver monitoring system according to the present embodiment.

### [Mode for Carrying Out the Invention]

An embodiment of a driver monitoring system 50 according to the present invention is described below with reference to the appended drawings. The driver monitoring system 50 includes a driver monitoring device 30, a transmitter 31, and an imaging unit 33 including a receiver 32. It is to be noted that an arrow Fr indicates the front in the vehicle front-rear direction in the drawings. An arrow R indicates the right side of an occupant looking toward the front of the vehicle. An arrow U indicates the upper side of the vehicle. In addition, a central line connecting the respective centers of the left and right wheels on the front side or the rear side in a case in which a vehicle travels straight will be referred to as a vehicle width direction reference line S below.

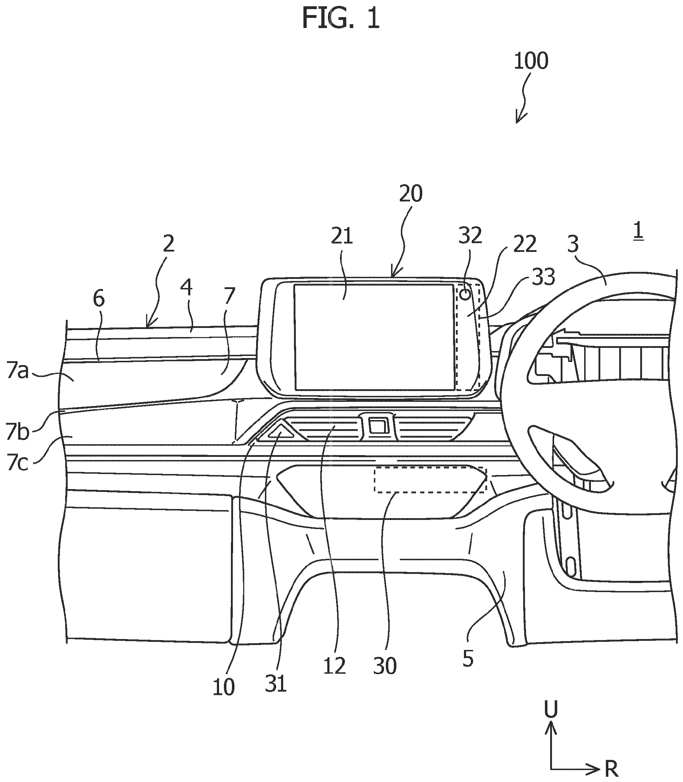

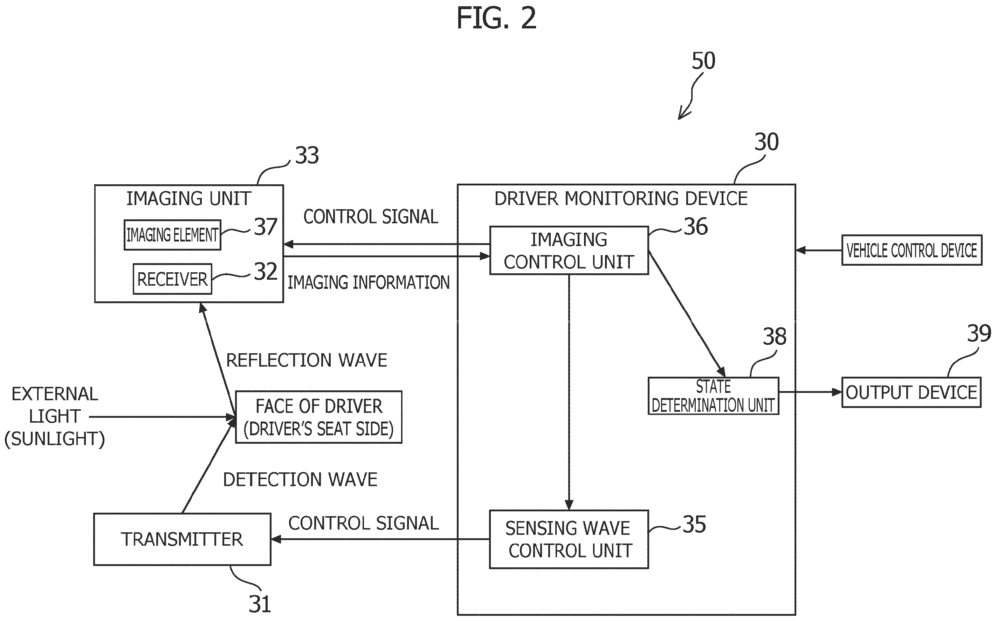

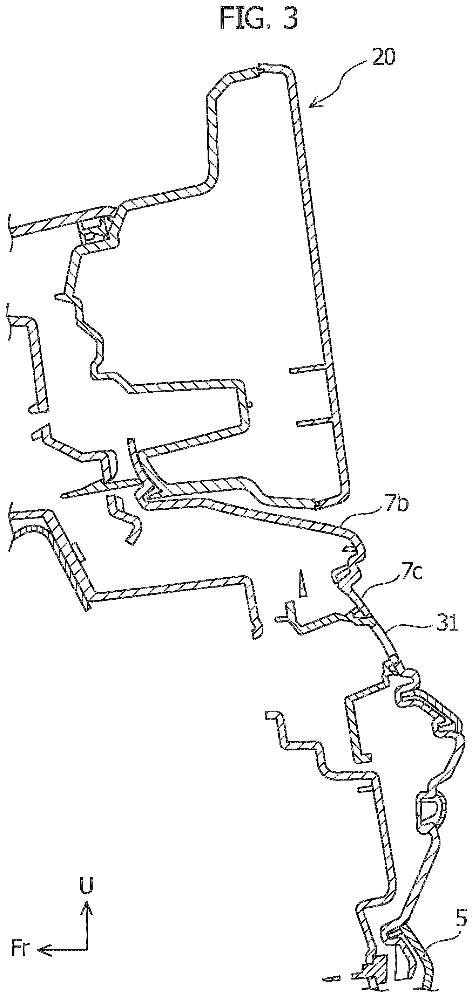

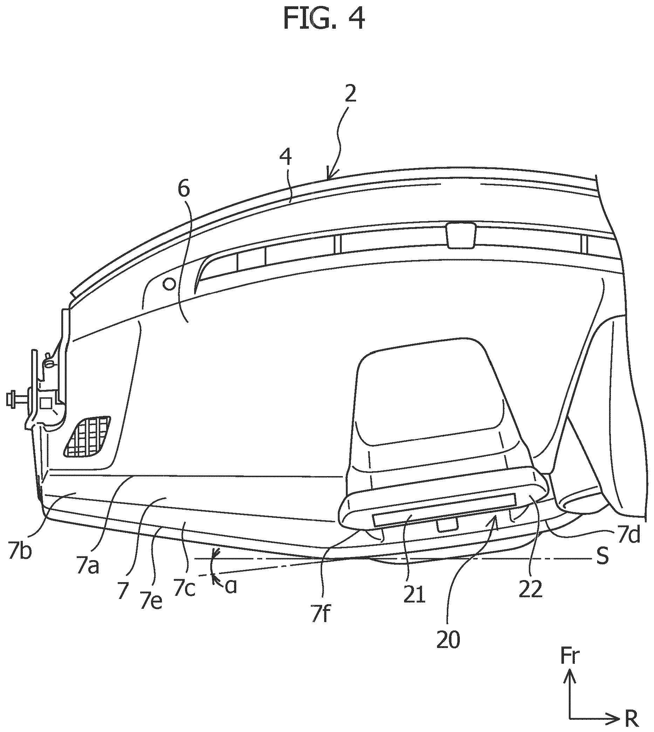

Figure 1 is a front view of an instrument panel 2 of a vehicle in which a portion of the instrument panel 2 on the passenger seat side (the left portion in Figure 1) is removed. The driver monitoring system 50 according to the present embodiment is mounted on the vehicle. It is to be noted that an embodiment of a so-called right-hand drive in which a driver's seat is disposed on the right side of a vehicle compartment 100 when facing the front of the vehicle is described as the present embodiment. However, in the case of a so-called left-hand drive in which a driver's seat is disposed on the left side of the vehicle compartment 100 when facing the front of the vehicle, the formation is symmetrical to the formation illustrated in Figure 1. Figure 2 is an example of a control block diagram of the driver monitoring system 50 according to the present invention. Figure 3 is a longitudinal sectional view of the instrument panel 2 of the vehicle on which the driver monitoring device 30 according to the present embodiment is mounted. Figure 4 is a plan view of the instrument panel 2 of the vehicle on which the driver monitoring device 30 according to the present embodiment is mounted. It is to be noted that some vehicles have no passenger seats. The "passenger seat side" will therefore refer to the opposite side to driver's seat side in a vehicle having no passenger seat.

The driver monitoring system 50 according to the present invention includes the imaging unit 33, the driver monitoring device 30 for monitoring the state of a driver, and the transmitter 31. The imaging unit 33 includes the receiver 32 mounted on the upper portion of the instrument panel 2 of a vehicle. The driver monitoring device 30 is disposed on the instrument panel 2. The transmitter 31 is disposed on the instrument panel 2. The instrument panel 2 of the vehicle on which the driver monitoring system 50 is mounted will be described with reference to Figures 1, 3, and 4. As illustrated in Figure 1, the front portion of the vehicle compartment 100 is provided with the instrument panel 2 below a front windshield 1. The instrument panel 2 extends in the vehicle width direction. A steering wheel 3 for steering the traveling direction of the vehicle is attached to the portion (the right portion in Figure 1) of the instrument panel 2 on the driver's seat side. An onboard device 20 described below is attached to the middle portion of the instrument panel 2.

The instrument panel 2 includes an upper member 4 and a lower member 5 that are vertically disposed. The upper member 4 includes a top surface portion 6 and a rear surface portion 7. The top surface portion 6 faces upward and extends in the vehicle width direction to connect both sides of the vehicle compartment 100. The front windshield 1 is disposed on the front side of the top surface portion 6. The rear surface portion 7 is disposed between the top surface portion 6 and the lower member 5 and extends in the vehicle width direction to connect both sides of the vehicle compartment 100.

The rear surface portion 7 includes a vertical surface portion 7a, a flat surface portion 7b, and an upward slope portion 7c. The upper end of the vertical surface portion 7a connects to the rear end of the top surface portion 6. The vertical surface portion 7a faces rearward. The front end of the flat surface portion 7b connects to the lower end of the vertical surface portion 7a. The flat surface portion 7b faces upward. The upper end of the upward slope portion 7c connects to the rear end of the flat surface portion 7b and the lower end of the upward slope portion 7c connects to the upper end of the lower member 5. As illustrated in Figure 3, the upward slope portion 7c is formed to be sloped rearward from the upper end of the upward slope portion 7c to the lower side. That is, the upward slope portion 7c is formed to be sloped upward. The upward slope portion 7c is disposed from the end of the instrument panel 2 on the passenger seat side in the vehicle width direction to the column cover. The position of the upward slope portion 7c in the up-down direction is substantially the same as the central position of the steering wheel 3 or is disposed slightly lower than the central position of the steering wheel 3.

In addition, as illustrated in Figure 4, the upward slope portion 7c of the rear surface portion 7 includes a driver's seat side slope portion 7d and a passenger seat side slope portion 7e. The driver's seat side slope portion 7d has a design surface (the surface toward the inside of the vehicle compartment) having the passenger seat side sloped to be positioned further rearward than the driver's seat side. That is, the design surface is sloped forward from the passenger seat side to the driver's seat side and directed toward the driver's seat side. The passenger seat side slope portion 7e has a design surface adjacent to the driver's seat side slope portion 7d on the passenger seat side, having the driver's seat side inclined to be positioned further rearward than the passenger seat side, and directed toward the passenger seat side. That is, the upward slope portion 7c includes the driver's seat side slope portion 7d having a design surface sloped toward the driver's seat side with respect to the vehicle width direction reference line S and the passenger seat side slope portion 7e having a design surface sloped toward the passenger seat side with respect to the vehicle width direction reference line S. The inclination angle of the driver's seat side slope portion 7d to the vehicle width direction reference line S is α degrees. The connection portion between the driver's seat side slope portion 7d and the passenger seat side slope portion 7e serves as a bulging portion 7f that bulges further rearward than both sides of the rear surface portion 7 in the vehicle width direction. That is, in a case in which the instrument panel 2 is viewed from above (plan view) as illustrated in Figure 4, the upward slope portion 7c of the rear surface portion 7 is formed in the shape of a mountain in which the bulging portion 7f bulges rearward.

The rear end of the flat surface portion 7b connecting the upper end of the upward slope portion 7c is formed in the shape of a mountain in accordance with the shapes of the driver's seat side slope portion 7d and the passenger seat side slope portion 7e included in the upward slope portion 7c. The bulging portion 7f formed by connecting the driver's seat side slope portion 7d and the passenger seat side slope portion 7e is positioned closer to the passenger seat side than the center of the instrument panel 2 in the vehicle width direction. The driver's seat side slope portion 7d and the passenger seat side slope portion 7e are both formed to be sloped downward from the front to the rear. That is, the driver's seat side slope portion 7d and the passenger seat side slope portion 7e are both formed to be sloped upward.

As illustrated in Figure 1, the middle portion of the upper member 4 in the vehicle width direction is provided with the onboard device 20. The upper member 4 is included in the upper portion side of the instrument panel 2. Specifically, the onboard device 20 is disposed in the middle of the instrument panel 2 in the vehicle width direction so as not to overlap on the steering wheel 3 in the vehicle width direction. The onboard device 20 is incorporated in the instrument panel 2 to rise from the flat surface portion 7b of the rear surface portion 7 across the top surface portion 6 and the rear surface portion 7. In addition, the onboard device 20 is disposed at the position corresponding to the driver's seat side slope portion 7d in the flat surface portion 7b, the rear end of which connects to the upper end of the upward slope portion 7c. The onboard device 20 is thus disposed closer to the driver's seat side than the bulging portion 7f in the vehicle width direction.

In addition, the onboard device 20 is disposed along the slope of the driver's seat side slope portion 7d in plan view. The onboard device 20 is therefore inclined in the direction of the driver's side. It is to be noted that the upward slope portion 7c is disposed below the onboard device 20. The onboard device 20 according to the present embodiment is an onboard device incorporated in the instrument panel 2. The onboard device 20 according to the present embodiment is not a so-called retrofittable onboard device.

The onboard device 20 is a display device including a display unit 21 and an outer frame 22. The display unit 21 is a display that displays information. The outer frame 22 holds the outer periphery of the display unit 21. The display unit 21 has a substantially rectangular shape. The outer frame 22 that holds the display unit 21 has a horizontally long shape in which the dimensions in the vehicle width direction are longer than the dimensions in the up-down direction. In the present embodiment, the onboard device 20 is a navigation device that assists a person driving (driver) in driving. In the present embodiment, the onboard device 20 is a navigation device, but this is not limiting. The onboard device 20 may be an audio device or a display device that displays speed, number of revolutions, or the like. It is to be noted that the end of the outer frame 22 of the onboard device 20 on the passenger seat side substantially agrees with the bulging portion 7f disposed below the onboard device 20 in the vehicle width direction.

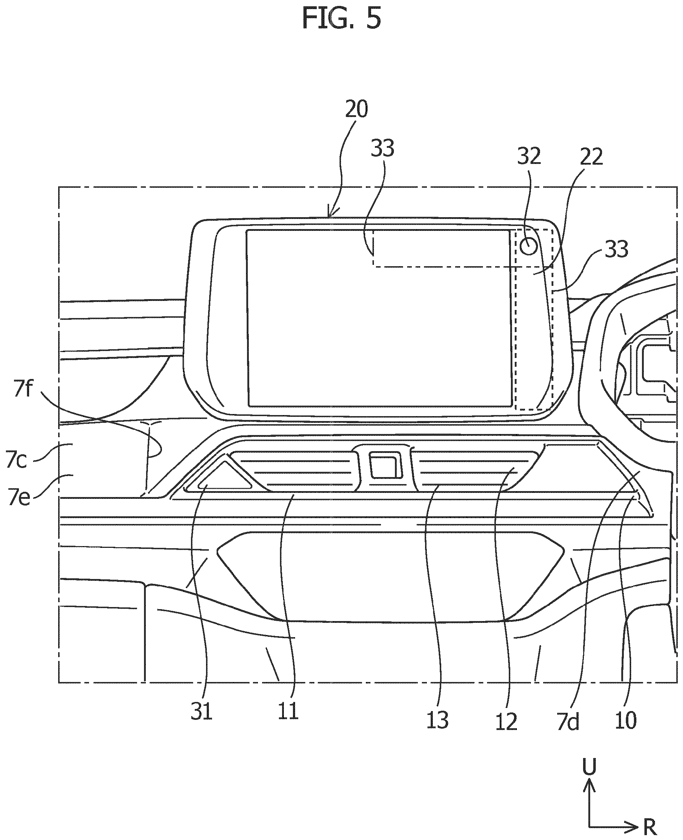

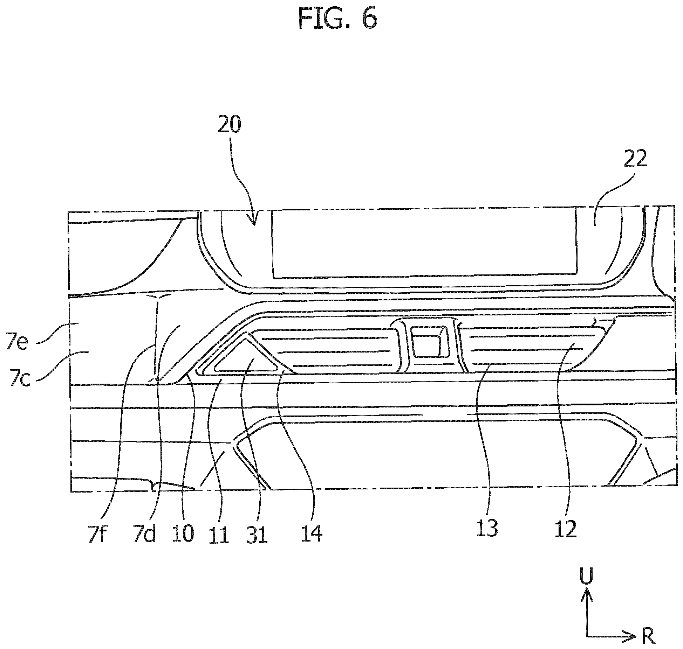

Next, the specific shape of the upward slope portion 7c in the middle of the instrument panel 2 in the vehicle width direction will be described with reference to Figures 1, 5, and 6. Figure 5 is a partially enlarged view of the area close to the middle of the instrument panel 2 in the vehicle width direction. Figure 6 is a partially enlarged view of the upward slope portion 7c in the area close to the middle of the instrument panel 2 in the vehicle width direction. As illustrated in Figures 1, 5, and 6, the driver's seat side slope portion 7d of the upward slope portion 7c is provided with a recess-shaped portion 10 that is formed to be positioned in the middle of the instrument panel 2 in the vehicle width direction and recessed from the design surface of the driver's seat side slope portion 7d. The recess-shaped portion 10 is positioned in the middle of the instrument panel 2 in the vehicle width direction. The end of the recess-shaped portion 10 on the passenger seat side in the vehicle width direction substantially agrees with the bulging portion 7f in the vehicle width direction. In addition, the recess-shaped portion 10 is disposed slightly lower than the central position of the steering wheel 3 in the up-down direction. The recess-shaped portion 10 is formed in the shape of an isosceles trapezoid having a longer bottom side than a top side. The driver's seat side of the recess-shaped portion 10 in the vehicle width direction overlaps on the passenger seat side of the steering wheel 3 in the vehicle width direction. The surface of a bottom wall 11 of the recess-shaped portion 10 on the vehicle compartment side is formed substantially in parallel with the design surface of the driver's seat side slope portion 7d. The bottom wall 11 is also sloped rearward from the top side of the bottom wall 11 to the lower side, that is, is sloped upward and directed toward the driver's seat side as with the driver's seat side slope portion 7d.

A blower outlet 12 from which airflow conditioned by an air-conditioning system (not shown) provided in the vehicle is blown is formed on the bottom wall 11. A louver 13 that adjusts the direction of the conditioned airflow is disposed at the blower outlet 12. The blower outlet 12 is formed in the shape of an isosceles trapezoid having a longer top side than a bottom side. A corner bottom wall 14 having a triangular shape is formed on the passenger seat side of the bottom wall 11. The corner bottom wall 14 is formed between the vertical side of the recess-shaped portion 10 on the passenger seat side and the vertical side of the blower outlet 12 on the passenger seat side. The corner bottom wall 14 is disposed lower than the onboard device 20 in the up-down direction. The corner bottom wall 14 is disposed at the position that is closer in the vehicle width direction to the passenger seat side than the center of the onboard device 20 in the vehicle width direction and at substantially the same position as that of the end of the onboard device 20 on the passenger seat side. The corner bottom wall 14 is thus adjacent to the bulging portion 7f on the driver's seat side in the vehicle width direction.

Next, the driver monitoring system 50 according to the present embodiment will be described with reference to Figure 2. Figure 2 is an example of a control block diagram of the driver monitoring system 50 according to the present embodiment. The driver monitoring system 50 is a system that monitors a dozing off state or the like of a driver of the vehicle. The driver monitoring system 50 includes the driver monitoring device 30, the transmitter 31 that transmits a sensing wave toward the driver, and the imaging unit 33 including the receiver 32 and an imaging element 37. The receiver 32 receives reflected light waves reflected by the driver. The imaging element 37 converts the reflected light waves received by the receiver 32 to an electrical signal. The imaging unit 33 is provided in the onboard device 20. The driver monitoring device 30 connects to the transmitter 31 and the imaging unit 33. The driver monitoring device 30 transmits a control signal for transmitting a sensing wave to the transmitter 31. In addition, the driver monitoring device 30 transmits a control signal related to the image capturing of the driver to the imaging unit 33 and receives imaging information from the imaging unit 33. The transmitter 31 transmits a sensing wave toward the driver, but the driver is not necessarily in the driver's seat. The sensing wave is thus transmitted toward the driver in a case in which the driver is in the driver's seat. In a case in which the driver is not in the driver's seat, the sensing wave is transmitted toward the driver's seat side. The reflected light waves received by the receiver 32 includes a sensing wave transmitted toward the driver (driver's seat side) from the transmitter 31 and is reflected by the driver (driver's seat side). In addition, the reflected light waves received by the receiver 32 sometimes includes, for example, external light such as sunlight hitting the driver (driver's seat side) which will be reflected by the driver (driver's seat side) in addition to the sensing wave reflected by the driver (driver's seat side). In addition, the receiver 32 sometimes receives external light directly in addition to the reflected light waves reflected by the driver (driver's seat side). At night or the like, the reflected light waves received by the receiver 32 are sensing waves transmitted toward the driver (driver's seat side) from the transmitter 31 and reflected by the driver (driver's seat side). The reflected light waves received by the receiver 32 thus includes sensing waves transmitted toward the driver (driver's seat side) from the transmitter 31 and reflected by the driver (driver's seat side).

The sensing wave transmitted by the transmitter 31 is an electromagnetic wave including, for example, light such as infrared light. The transmitter 31 is, for example, a light-emitting unit that emits light such as infrared light serving as a sensing wave on the face of the driver (driver's seat side). The receiver 32 is, for example, a camera lens that receives light such as an infrared light serving as a sensing wave which is transmitted toward the driver (driver's seat side) from the transmitter 31 and is reflected by the driver (driver's seat side) to return. The imaging unit 33 is, for example, a camera that captures an image of the driver (driver's seat side) based on light such as infrared light serving as a sensing wave received by the receiver 32. The imaging unit 33 includes the imaging element 37 (e.g., CMOS image sensor) that converts incident light formed as an image by the camera lens which is the receiver 32 to an electrical signal. The emission plane of a sensing wave transmitted from the transmitter 31 faces the driver (driver's seat side) and the incident plane of the receiver 32 that receives the sensing wave faces the driver (driver's seat side). It is to be noted that the imaging unit 33 includes the receiver 32 and the imaging element 37 and the imaging unit 33 is provided upright to be sandwiched by the outer frame 22 of the onboard device 20 and the instrument panel 2 in the present embodiment. More specifically, the imaging unit 33 is provided upright to be sandwiched by the vertical frame of the outer frame 22 on the driver's seat side and the instrument panel 2, and the receiver 32 is exposed to the design surface from a hole formed in the outer frame 22. The imaging unit 33 (imaging element 37) including the receiver 32 is thus provided to the outer frame. The imaging element 37 of the imaging unit 33 may not, however, be provided to the outer frame 22, but may be provided to the driver monitoring device 30 through an optical fiber or the like. The driver monitoring device 30 is provided on the instrument panel 2.

The driver monitoring device 30 includes a sensing wave control unit 35, an imaging control unit 36, and a state determination unit 38. The sensing wave control unit 35 transmits, to the transmitter 31, a control signal related to the transmission of a sensing wave. The imaging control unit 36 transmits, to the imaging unit 33, a control signal related to the image capturing of a driver. In addition, the imaging control unit 36 receives the captured image of the state of the driver that is transmitted from the imaging unit 33 and processes the received image. The state determination unit 38 determines the state of the driver based on information transmitted from the imaging control unit 36 and subjected to image processing. In addition, the state determination unit 38 transmits a result of the determination of the state of the driver to an output device 39 disposed on the instrument panel 2. The output device 39 notifies the driver by transmitting, to a center-mounted instrument or the like, the result of the determination of the state of the driver transmitted from the state determination unit 38. It is to be noted that not only may the result of the determination of the state of the driver be transmitted to the center-mounted instrument or the like, but sounds may also be emitted or the seat may also be, for example, vibrated to notify the driver. The driver monitoring device 30 connects to a vehicle control device and transmits the state of the driver determined by the state determination unit 38 to the vehicle control device.

The imaging unit 33 including the receiver 32 is provided to the outer frame 22 of the onboard device 20. The receiver 32 is disposed at the upper right portion of the outer frame 22 to be disposed closer to the driver's seat side with respect to the middle of the onboard device 20 in the vehicle width direction. The receiver 32 is thus disposed at a position that is closer to the passenger seat side than the driver's seat side in the vehicle width direction of the instrument panel 2 and does not overlap on the steering wheel 3.

As described above, the corner bottom wall 14 having a triangular shape and formed between the vertical side of the recess-shaped portion 10 on the passenger seat side and the vertical side of the blower outlet 12 on the passenger seat side is formed on the passenger seat side of the bottom wall 11 of the recess-shaped portion 10. The transmitter 31 is disposed to be buried in the corner bottom wall 14. The transmitter 31 is formed to have a triangular shape smaller than that of the corner bottom wall 14. The transmitter 31 is disposed to allow the surface of the corner bottom wall 14 on the vehicle compartment side and the surface of the transmitter 31 on the vehicle compartment side to have the same height and be flat. The corner bottom wall 14 is disposed lower than the onboard device 20 in the up-down direction and disposed at substantially the same position as that of the end of the onboard device 20 on the passenger seat side in the vehicle width direction. The transmitter 31 is thus disposed lower than the onboard device 20 in the up-down direction and disposed at substantially the same position as that of the end of the onboard device 20 on the passenger seat side in the vehicle width direction. The transmitter 31 is thus disposed apart from the receiver 32 farther than the distance between the upper right corner portion and the lower left corner portion of the onboard device 20 having a horizontally long shape. The transmitter 31 and the receiver 32 included in the driver monitoring device 30 according to the present embodiment therefore make it possible to reduce a so-called red-eye effect at the time of image capturing.

In addition, the transmitter 31 is disposed on the corner bottom wall 14 of the bottom wall 11 of the recess-shaped portion 10. This makes it possible to prevent light cast from the transmitter 31 from being blocked by an arm of an occupant because the transmitter 31 is disposed next to the louver 13 that is operated less frequently than another switch member (not shown) disposed on the instrument panel 2. In addition, the transmitter 31 is disposed on the corner bottom wall 14 of the bottom wall 11 formed to be recessed on the driver's seat side slope portion 7d. This makes it possible to prevent an object from hitting the transmitter 31 even in a case in which the object hits the driver's seat side slope portion 7d.

In addition, the position of the upward slope portion 7c in the up-down direction is substantially the same as the central position of the steering wheel 3 or disposed slightly lower than the central position of the steering wheel 3. The transmitter 31 is thus disposed at substantially the same position as the central position of the steering wheel 3 or slightly lower than the central position of the steering wheel 3 in the up-down direction. In addition, the transmitter 31 is disposed on the corner bottom wall 14 of the bottom wall 11 sloped upward. The transmitter 31 therefore casts light on the face of the driver from a side lower than the face of the driver. The transmitter 31 included in the driver monitoring device 30 according to the present embodiment thus makes it possible to reliably illuminate the face of the driver even when the driver is wearing a hat, a cap, or the like. In addition, it is possible to prevent the face of an occupant sitting on the seat at the rear of the driver from being illuminated.

In addition, the corner bottom wall 14 is adjacent to the bulging portion 7f on the driver's seat side in the vehicle width direction. The transmitter 31 disposed on the corner bottom wall 14 is thus disposed near the end portion of the driver's seat side slope portion 7d on the passenger seat side. The transmitter 31 included in the driver monitoring device 30 according to the present embodiment therefore makes it possible to reliably illuminate the face of the driver even when the driver is wearing a hat, a cap, or the like.

The recess-shaped portion 10 is provided to the driver's seat side slope portion 7d. The corner bottom wall 14 is disposed on the bottom wall 11 of the recess-shaped portion 10. The bottom wall 11 is formed substantially in parallel with the design surface of the driver's seat side slope portion 7d. This inclines the transmitter 31 disposed on the corner bottom wall 14 in the direction of the driver side as with the onboard device 20. The onboard device 20 and the transmitter 31 are thus inclined in the direction of the driver side. This facilitates the driver monitoring device 30 so as to easily recognize the driver.

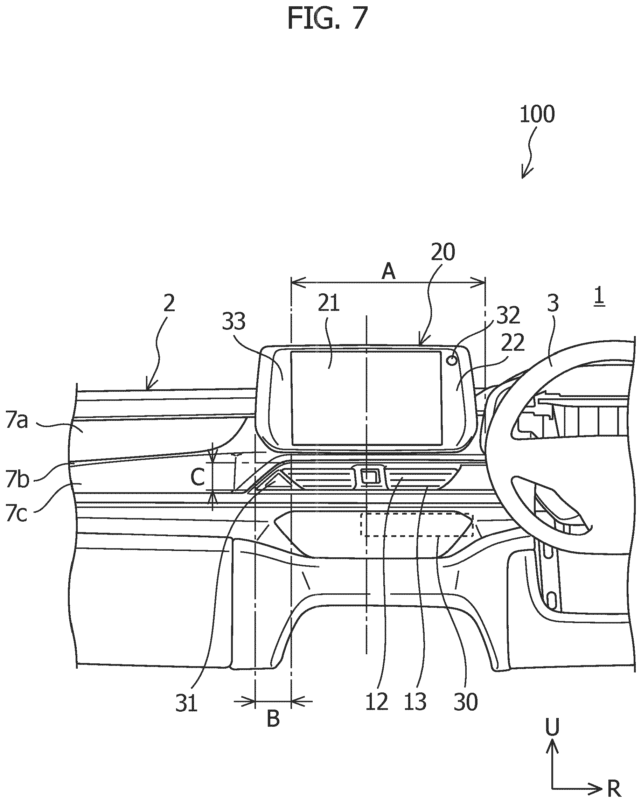

Next, a variation of the disposition of the transmitter 31 and the receiver 32 will be described with reference to Figure 7. It is to be noted that the positional relationship between the steering wheel 3, the blower outlet 12 at which the louver 13 is disposed, and the onboard device 20 in Figure 7 is the same as that of the embodiment described above. In the embodiment described above, the receiver 32 is disposed at the upper right portion of the outer frame 22 of the onboard device 20, but the receiver 32 may be disposed at the outer frame 22 and positioned in the vehicle width direction between the passenger seat end of the display unit 21 in the vehicle width direction and the passenger seat end of the steering wheel 3 in the vehicle width direction (the area of an arrow A in Figure 7).

This allows the receiver 32 to receive a sensing wave reflected by the driver to come back without being interfered with by the steering wheel 3 even when the end of the onboard device 20 on the driver's seat side in the vehicle width direction is disposed to overlap on the steering wheel 3.

The transmitter 31 may be disposed closer to the passenger seat side than the vertical side of the blower outlet 12 on the passenger seat side in the vehicle width direction and between the passenger seat end (the opposite side to the passenger seat end in the vehicle width direction) of the onboard device 20 in the vehicle width direction and the passenger seat end (the opposite side to passenger seat end in the vehicle width direction) of the display unit 21 in the vehicle width direction (the area of an arrow B in Figure 7). The louver 13 is disposed at the blower outlet 12. It is to be noted that the blower outlet 12 is disposed lower than the onboard device 20. In addition, the transmitter 31 is positioned between the upper and lower ends of the blower outlet 12 (the area of arrow C in Figure 7) in the up-down direction.

This makes it possible to dispose the transmitter 31 and the receiver 32 apart from each other. It is thus possible to reduce a so-called red-eye effect at the time of image capturing. In addition, the transmitter 31 is disposed closer to the passenger seat side than the vertical side of the blower outlet 12 on the passenger seat side. The blower outlet 12 is disposed below the onboard device 20. That is, the transmitter 31 is disposed slightly lower than the central position of the steering wheel 3 in the up-down direction. This makes it possible to reliably illuminate the face of the driver even when the driver is wearing a hat, a cap, or the like. In addition, it is possible to prevent the face of an occupant sitting on the seat at the rear of the driver from being illuminated.

In the present embodiment, the driver monitoring system 50 includes the transmitter 31, the imaging unit 33, and the driver monitoring device 30. The transmitter 31 transmits a sensing wave toward the driver's seat side of the vehicle. The imaging unit 33 includes the receiver 32 that receives reflected light waves reflected by the driver's seat side. The imaging unit 33 captures an image of a driver based on the reflected light waves received by the receiver 32. The driver monitoring device 30 monitors the state of the driver based on information from the imaging unit 33. The onboard device 20 is provided to the upper portion of the instrument panel 2 of the vehicle and the onboard device 20 includes the display unit 21 and the outer frame 22. The display unit 21 displays information. The outer frame 22 holds the outer periphery of the display unit 21. The receiver 32 is disposed on the driver's seat side of the outer frame 22. The transmitter 31 is disposed lower than the onboard device 20 and closer to the opposite side to the driver's seat side than the middle of the onboard device 20 in the vehicle width direction on the instrument panel 2.

This configuration makes it possible to capture a clear image of the face of the driver while preventing the imaging unit 33 from receiving a sensing wave of the transmitter 31 that hits an occupant at the rear of the driver's seat.

In the present embodiment, the instrument panel 2 includes the upward slope portion 7c lower than the onboard device 20. The upward slope portion 7c has a design surface sloped rearward from the upper side to the lower side. The transmitter 31 is disposed at the upward slope portion 7c.

This configuration allows the transmitter 31 to emit from the lower side to the upper side. It is thus possible to reliably illuminate the face of the driver even when the driver is wearing a hat or a cap. It is possible to prevent the face of an occupant sitting in the seat at the rear of the driver from being illuminated.

In the present embodiment, the instrument panel 2 includes the driver's seat side slope portion 7d having a design surface sloped forward from the passenger seat side to the driver's seat side and directed toward the driver's seat side. The onboard device 20 and the transmitter 31 are disposed along the driver's seat side slope portion 7d.

This configuration inclines the onboard device 20 and the transmitter 31 toward the driver side. This further facilitates recognition of the driver.

In the present embodiment, the transmitter 31 is disposed near the end portion of the driver's seat side slope portion 7d on the passenger seat side. The disposition of the transmitter 31 near the end portion of the driver's seat side slope portion 7d on the passenger seat side brings the transmitter 31 closer to the driver's side. This further facilitates the driver monitoring device 30 to recognize the driver.

In the embodiment described above, the imaging unit 33 includes the receiver 32 and the imaging element 37. The imaging unit 33 is provided upright to be sandwiched by the vertical frame of the outer frame 22 of the onboard device 20 on the driver's seat side and the instrument panel 2. This allows the imaging element 37 of the imaging unit 33 to be provided in the onboard device 20. The imaging element 37 need not, however, be provided in the onboard device 20. For example, the imaging element 37 of the imaging unit 33 may be provided to the driver monitoring device 30 through an optical fiber or the like. In addition, the imaging unit 33 is provided upright to be sandwiched by the vertical frame of the outer frame 22 on the driver's seat side and the instrument panel 2, but the imaging unit 33 may be provided sideways on the upper portion side of the onboard device 20 as indicated by the two-dot chain line in Figure 5. It is, however, desirable even in that case that the receiver 32 be disposed at the upper right portion of the outer frame 22.

The embodiments of the present disclosure and the modification examples thereof have been described above, but the present invention is defined in the appended claims.

### [Reference Signs List]

- 1: Front windshield
- 2: Instrument panel
- 3: Steering wheel
- 4: Upper member
- 5: Lower member
- 6: Top surface portion
- 7: Rear surface portion
- 7a: Vertical surface portion
- 7b: Flat surface portion
- 7c: Upward slope portion
- 7d: Driver's seat side slope portion
- 7e: Passenger seat side slope portion
- 7f: Bulging portion
- 10: Recess-shaped portion
- 11: Bottom wall
- 12: Blower outlet
- 13: Louver
- 14: Corner bottom wall
- 20: Onboard device
- 21: Display unit
- 22: Outer frame
- 30: Driver monitoring device
- 31: Transmitter
- 32: Receiver
- 33: Imaging unit
- 35: Sensing wave control unit
- 36: Imaging control unit
- 37: Imaging element
- 38: State determination unit
- 39: Output device
- 50: Driver monitoring system
- 100: Vehicle compartment
- S: Vehicle width direction reference line

## Claims

1. A driver monitoring system (50) comprising:
a transmitter (31) configured to transmit a sensing wave toward a driver's seat side of a vehicle;
an imaging unit (33) including a receiver (32) that receives reflected light waves reflected by the driver's seat side, the imaging unit (33) being configured to capture an image of a driver based on the reflected light waves received by the receiver (32); and
a driver monitoring device (30) configured to monitor a state of the driver based on information from the imaging unit (33),
an onboard device (20) is provided to an upper portion of an instrument panel (2) of the vehicle and a middle portion of the instrument panel (2) in a vehicle width direction, the onboard device (20) includes a display unit (21) and an outer frame (22), the display unit (21) displaying information, the outer frame (22) holding an outer periphery of the display unit (21),
the receiver (32) is disposed on a driver's seat side of the outer frame (22), and
the transmitter (31) is disposed lower than the onboard device (20) and closer to an opposite side to driver's seat side than a middle of the onboard device (20) in the vehicle width direction on the instrument panel (2),
the instrument panel (2) includes:
an upward slope portion (7c) lower than the onboard device (20), the upward slope portion (7c) having a design surface sloped rearward from an upper side to a lower side, and
a driver's seat side slope portion (7d) having a design surface sloped forward from the opposite side to the driver's seat side to the driver's seat side and directed toward the driver's seat side,
the transmitter (31) is disposed on the upward slope portion (7c), and is disposed near an end portion of the driver's seat side slope portion (7d) on the opposite side to driver's seat side,
the onboard device (20) is disposed along the driver's seat side slope portion (7d),
the driver's seat side slope portion (7d) is provided with a recess-shaped portion (10) that is formed lower than the onboard device (20) to be recessed from the design surface of the driver's seat side slope portion (7d), and
a blower outlet (12) from which conditioned airflow is blown is formed on a bottom wall (11) of the recess-shaped portion (10) and a louver (13) that adjusts a direction of the conditioned airflow is disposed at the blower outlet (12),
the driver monitoring system (50) being **characterized in that**:
the transmitter (31) is disposed to be buried in a corner bottom wall (14) formed on the opposite side to driver's seat side on the bottom wall (11) of the recess-shaped portion (10), and the transmitter (31) on the vehicle compartment side is positioned forward of the design surface of the driver's seat side slope portion (7d).

2. The driver monitoring system (50) according to claim 1, wherein
an emission plane of the sensing wave in the transmitter (31) faces the driver's seat side,
the receiver (32) is disposed at an angle along the driver's seat side slope portion (7d), and an incident plane of the reflected light waves faces the driver's seat side, and
the transmitter (31) is disposed rearward the receiver (32) in a plan view.

3. The driver monitoring system (50) according to claim 1 or 2, wherein
the imaging unit (33) further includes an imaging element (37) that converts the reflected light waves received by the receiver (32) to an electrical signal, and
the imaging element (37) is provided in the onboard device (20).

4. The driver monitoring system (50) according to any one of claims 1-3, wherein
the receiver (32) is positioned in the vehicle width direction between an opposite side to the driver's seat end of the display unit (21) in the vehicle width direction and an opposite side to the driver's seat end of a steering wheel (3) in the vehicle width direction,
the transmitter (31) is positioned in the vehicle width direction closer to an opposite side to the driving seat side than a vertical side of the blower outlet (12) on the opposite side to driving seat side in the vehicle width direction and between an opposite side to the driver's seat end of the onboard device (20) in the vehicle width direction and the opposite side to the driver's seat end of the display unit (21) in the vehicle width direction, and
the transmitter (31) is disposed lower than the onboard device (20) in an up-down direction and positioned between upper and lower ends of the blower outlet (12).

## Patentansprüche

1. Fahrerüberwachungssystem (50), umfassend:
einen Sender (31), welcher dazu eingerichtet ist, eine Erfassungswelle in Richtung einer Fahrersitzseite eines Fahrzeugs zu senden;
eine Abbildungseinheit (33), welche einen Empfänger (32) umfasst, welcher durch die Fahrersitzseite reflektierte Lichtwellen empfängt, wobei die Abbildungseinheit (33) dazu eingerichtet ist, auf Grundlage der durch den Empfänger (32) empfangenen reflektierten Lichtwellen ein Bild eines Fahrers aufzunehmen; und
eine Fahrerüberwachungsvorrichtung (30), welche dazu eingerichtet ist, auf Grundlage von Informationen von der Abbildungseinheit (33) einen Zustand des Fahrers zu überwachen,
wobei eine bordeigene Vorrichtung (20) an einem oberen Abschnitt einer Instrumententafel (2) des Fahrzeugs und einem in einer Fahrzeugbreitenrichtung mittleren Abschnitt der Instrumententafel (2) bereitgestellt ist, wobei die bordeigene Vorrichtung (20) eine Anzeigeeinheit (21) und einen äußeren Rahmen (22) umfasst, wobei die Anzeigeeinheit (21) Informationen anzeigt, wobei der äußere Rahmen (22) eine äußere Umrandung der Anzeigeeinheit (21) hält,
der Empfänger (32) an einer Fahrersitzseite des äußeren Rahmens (22) angeordnet ist und
der Sender (31) an der Instrumententafel (2) niedriger als die bordeigene Vorrichtung (20) und in der Fahrzeugbreitenrichtung näher an einer der Fahrersitzseite entgegengesetzten Seite als eine Mitte der bordeigenen Vorrichtung (20) angeordnet ist,
wobei die Instrumententafel (2) umfasst:
einen nach oben geneigten Abschnitt (7c), welcher niedriger liegt als die bordeigene Vorrichtung (20), wobei der nach oben geneigte Abschnitt (7c) eine Designfläche aufweist, welche von einer oberen Seite zu einer unteren Seite nach hinten geneigt ist, und
einen Fahrersitzseitenneigungsabschnitt (7d), welcher eine Designfläche aufweist, welche von der entgegengesetzten Seite zu der Fahrersitzseite zu der Fahrersitzseite nach vorne geneigt ist und in Richtung der Fahrersitzseite gerichtet ist,
wobei der Sender (31) an dem nach oben geneigten Abschnitt (7c) angeordnet ist und in der Nähe eines Endabschnitts des Fahrersitzseitenneigungsabschnitts (7d) an der zu der Fahrersitzseite entgegengesetzten Seite angeordnet ist,
die bordeigene Vorrichtung (20) entlang des Fahrersitzseitenneigungsabschnitts (7d) angeordnet ist,
der Fahrersitzseitenneigungsabschnitt (7d) mit einem vertiefungsförmigen Abschnitt (10) bereitgestellt ist, welcher niedriger als die bordeigene Vorrichtung (20) gebildet ist, um von der Designfläche des Fahrersitzseitenneigungsabschnitts (7d) vertieft zu sein, und
ein Gebläseauslass (12), aus welchem ein klimatisierter Luftstrom geblasen wird, an einer unteren Wand (11) des vertiefungsförmigen Abschnitts (10) gebildet ist, und eine Klappe (13), welche eine Richtung des klimatisierten Luftstroms einstellt, an dem Gebläseauslass (12) angeordnet ist,
wobei das Fahrerüberwachungssystem (50) **dadurch gekennzeichnet ist, dass**:
der Sender (31) derart angeordnet ist, dass er in einer unteren Ecke (14) der Wand versteckt ist, welche an der zu der Fahrersitzseite entgegengesetzten Seite an der unteren Wand (11) des vertiefungsförmigen Abschnitts (10) gebildet ist, und der Sender (31) an der Fahrzeugraumseite vor der Designfläche des Fahrersitzseitenneigungsabschnitts (7d) positioniert ist.

2. Fahrerüberwachungssystem (50) nach Anspruch 1, wobei
eine Emissionsebene der Erfassungswelle in dem Sender (31) der Fahrersitzseite zugewandt ist,
der Empfänger (32) in einem Winkel entlang des Fahrersitzseitenneigungsabschnitts (7d) angeordnet ist und eine Einfallsebene der reflektierten Lichtwellen der Fahrersitzseite zugewandt ist und
der Sender (31) in einer Draufsicht hinter dem Empfänger (32) angeordnet ist.

3. Fahrerüberwachungssystem (50) nach Anspruch 1 oder 2, wobei
die Abbildungseinheit (33) ferner ein Abbildungselement (37) umfasst, welches die durch den Empfänger (32) empfangenen reflektierten Lichtwellen in ein elektrisches Signal umwandelt, und
das Abbildungselement (37) in der bordeigenen Vorrichtung (20) bereitgestellt ist.

4. Fahrerüberwachungssystem (50) nach einem der Ansprüche 1-3, wobei
der Empfänger (32) in der Fahrzeugbreitenrichtung zwischen einer in der Fahrzeugbreitenrichtung zu dem Fahrersitzende der Anzeigeeinheit (21) entgegengesetzten Seite und einer in der Fahrzeugbreitenrichtung zu dem Fahrersitzende eines Lenkrads (3) entgegengesetzten Seite positioniert ist,
der Sender (31) in der Fahrzeugbreitenrichtung näher an einer zu der Fahrersitzseite entgegengesetzten Seite als eine vertikale Seite des Gebläseauslasses (12) an der in der Fahrzeugbreitenrichtung zu der Fahrersitzseite entgegengesetzten Seite und zwischen einer in der Fahrzeugbreitenrichtung zu dem Fahrersitzende der bordeigenen Vorrichtung (20) entgegengesetzten Seite und der in der Fahrzeugbreitenrichtung zu dem Fahrersitzende der Anzeigeeinheit (21) entgegengesetzten Seite positioniert ist und
der Sender (31) in einer Oben-Unten-Richtung niedriger als die bordeigene Vorrichtung (20) angeordnet ist und zwischen einem oberen und einem unteren Ende des Gebläseauslasses (12) positioniert ist.

## Revendications

1. Système de surveillance de conducteur (50) comprenant :
un émetteur (31) configuré pour transmettre une onde de détection vers un côté siège conducteur d'un véhicule ;
une unité d'imagerie (33) comportant un récepteur (32) qui reçoit des ondes lumineuses réfléchies par le côté siège conducteur, l'unité d'imagerie (33) étant configurée pour capturer une image d'un conducteur sur la base des ondes lumineuses réfléchies reçues par le récepteur (32) ; et
un dispositif de surveillance de conducteur (30) configuré pour surveiller un état du conducteur sur la base des informations provenant de l'unité d'imagerie (33),
un dispositif embarqué (20) est prévu sur une partie supérieure d'un tableau de bord (2) du véhicule et une partie centrale du tableau de bord (2) dans une direction de largeur de véhicule, le dispositif embarqué (20) comporte une unité d'affichage (21) et un cadre externe (22), l'unité d'affichage (21) affichant des informations, le cadre externe (22) maintenant une périphérie externe de l'unité d'affichage (21),
le récepteur (32) est disposé sur un côté siège conducteur du cadre externe (22), et
l'émetteur (31) est disposé plus bas que le dispositif embarqué (20) et plus près d'un côté opposé au côté siège conducteur qu'un centre du dispositif embarqué (20) dans la direction de largeur de véhicule sur le tableau de bord (2),
le tableau de bord (2) comporte :
une partie à pente ascendante (7c) plus basse que le dispositif embarqué (20), la partie à pente ascendante (7c) présentant une surface de conception inclinée vers l'arrière à partir d'un côté supérieur vers un côté inférieur, et
une partie inclinée côté siège conducteur (7d) présentant une surface de conception inclinée vers l'avant à partir du côté opposé au côté siège conducteur vers le côté siège conducteur et dirigée vers le côté siège conducteur,
l'émetteur (31) est disposé sur la partie à pente ascendante (7c) et est disposé près d'une partie d'extrémité de la partie inclinée côté siège conducteur (7d) du côté opposé au côté siège conducteur,
le dispositif embarqué (20) est disposé le long de la partie inclinée côté siège conducteur (7d),
la partie inclinée côté siège conducteur (7d) est pourvue d'une partie en forme d'évidement (10) qui est formée plus bas que le dispositif embarqué (20) pour être encastrée à partir de la surface de conception de la partie inclinée côté siège conducteur (7d), et
une sortie de soufflante (12) par laquelle un flux d'air conditionné est expulsé est formée sur une paroi inférieure (11) de la partie en forme d'évidement (10) et une grille (13) qui ajuste une direction du flux d'air conditionné est disposée au niveau de la sortie de soufflante (12),
le système de surveillance de conducteur (50) étant **caractérisé en ce que** :
l'émetteur (31) est disposé pour être enfoui dans une paroi inférieure d'angle (14) formée du côté opposé au côté siège conducteur sur la paroi inférieure (11) de la partie en forme d'évidement (10), et l'émetteur (31) du côté compartiment du véhicule est positionné en avant de la surface de conception de la partie inclinée côté siège conducteur (7d).

2. Système de surveillance de conducteur (50) selon la revendication 1, dans lequel un plan d'émission de l'onde de détection dans l'émetteur (31) fait face au côté siège conducteur,
le récepteur (32) est disposé à un angle le long de la partie inclinée côté siège conducteur (7d), et un plan incident des ondes lumineuses réfléchies est orienté vers le côté siège conducteur, et
l'émetteur (31) est disposé à l'arrière du récepteur (32) en vue de dessus.

3. Système de surveillance de conducteur (50) selon la revendication 1 ou 2, dans lequel
l'unité d'imagerie (33) comporte en outre un élément d'imagerie (37) qui convertit les ondes lumineuses réfléchies reçues par le récepteur (32) en un signal électrique, et l'élément d'imagerie (37) est prévu dans le dispositif embarqué (20).

4. Système de surveillance de conducteur (50) selon l'une quelconque des revendications 1-3, dans lequel
le récepteur (32) est positionné dans la direction de largeur de véhicule entre un côté opposé à l'extrémité de siège conducteur de l'unité d'affichage (21) dans la direction de largeur de véhicule et un côté opposé à l'extrémité de siège conducteur d'un volant (3) dans la direction de largeur de véhicule,
l'émetteur (31) est positionné dans la direction de largeur de véhicule plus près d'un côté opposé au côté siège conducteur qu'un côté vertical de la sortie de soufflante (12) du côté opposé au côté siège conducteur dans la direction de largeur de véhicule et entre un côté opposé à l'extrémité de siège conducteur du dispositif embarqué (20) dans la direction de largeur de véhicule et le côté opposé à l'extrémité de siège conducteur de l'unité d'affichage (21) dans la direction de largeur de véhicule, et
l'émetteur (31) est disposé plus bas que le dispositif embarqué (20) dans une direction de haut en bas et positionné entre les extrémités supérieure et inférieure de la sortie de soufflante (12).
